# EUROPÄISCHE PATENTANMELDUNG

(11) **EP 0 984 173 A2**
(43) Veröffentlichungstag der Anmeldung: **08.03.2000**
(21) Anmeldenummer: 99115157.2
(22) Anmeldetag: 12.08.1999
(51) Int. Cl.: F16B 5/02

(54) **Montageelement zur Positionierung und Verbindung von beabstandeten Bauteilen und Verbindungsstellen unter Verwendung des Montageelements**

(30) Priorität: 03.09.1998 DE 19840133
(71) Anmelder: Volkswagen Aktiengesellschaft, 38436 Wolfsburg (DE)
(72) Erfinder: Jonat, Jochen, 38440 Wolfsburg (DE)

(57) **Zusammenfassung**

Die Erfindung betrifft ein Montageelement (10) zur Positionierung und Verbindung von mindestens einem Hinterbauteil (3) und einem von diesem beabstandeten Vorderbauteil (2), wobei das Montageelement mit einem Verbindungselement zusammenwirkt, das diese Bauteile in Montageöffnungen (4) axial durchdringt und in das Montageelement eindringt, wobei das Montageelement (10) in seiner Außenabmessung derart auf die zu verbindenden Bauteile abgestimmt ist, daß es die Montageöffnungen (4) aller Bauteile, ausgenommen der des Vorderbauteils (2), durchdringt, aus einer Hinterhülse (11) und einer Vorderhülse (12) besteht, die entlang einer Gleitfläche (14) mit axialer Steigung lose ineinandergreifen, und wobei die Gleitfläche eine axiale Verschiebung der beiden Hülsen (11,12) zueinander ermöglicht. Die axiale Verschiebung der beiden Hülsen bewirkt eine Erweiterung der Außenabmessung des Montageelements, so daß dieses zumindest im Hinterbauteil (3) verspannt wird. Mit diesem Montageelement läßt sich erfindungsgemäß eine Verbindungsstelle schaffen, die zur kraftschlüßigen Verbindung und Positionierung von undefiniert beabstandeten Bauteilen verwendet werden kann, wobei unerwünschte Verspannungen in den Bauteilen vermieden werden.

## Beschreibung

Die vorliegende Erfindung betrifft ein Montageelement zur Positionierung und Verbindung von mindestens einem Hinterbauteil und einem von diesem beabstandeten Vorderbauteil, wobei das Montageelement mit einem Verbindungselement zusammenwirkt, das diese Bauteile in Montageöffnungen axial durchdringt und in das Montageelement eindringt. Außerdem betrifft die Erfindung eine Verbindungsstelle zur kraftschlüssigen Verbindung und Positionierung von mindestens einem Hinterbauteil und einem von diesem undefiniert beabstandeten Vorderbauteil mit einem Verbindungselement, welches sich axial durch Montageöffnungen in den Bauteilen erstreckt und diese gegeneinander verspannt.

Derartige Verbindungsstellen und Montageelemente werden beispielsweise benötigt, wenn voneinander beabstandete Bauteile miteinander kraftschlüssig verbunden werden sollen. Sofern zwei oder mehrere Bauteile, die einen gewissen Abstand voneinander aufweisen, beispielsweise durch eine einfache Schraub-Mutter-Verbindung zusammengefügt werden, wird eine kraftschlüssige Verbindung erst erreicht, wenn ein Verspannungszustand zwischen diesen Bauteilen hergestellt ist. Beim Einwirken dieser Spannkraft auf die Bauteile kann sich gegebenenfalls die Lage der Bauteile in unerwünschter Weise verändern. Weniger stabile Bauteile können gegebenenfalls verformt oder sogar zerstört werden. Eine Beabstandung zwischen verschiedenen, miteinander zu verbindenden Bauteilen kann sich bei Montagevorgängen auch unerwünscht ergeben, aufgrund der Summierung vorhandener Toleranzen.

Derartige Probleme können beispielsweise bei der Montage von Armaturelementen in Kraftfahrzeugen auftreten. Gerade in diesem Bereich besteht das Problem, daß bei der Verbindung von aufgrund von Toleranzen beabstandeter Bauteile Spannungen in diesen Bauteilen auftreten können, die aufgrund der Schwingungsanfälligkeit des Gesamtsystems letztlich zu Klappergeräuschen oder auch zum vorzeitigen Verschleiß der Bauteile führen können.

Der Ausgleich auftretender, unerwünschter Abstände zwischen Bauteilen bei der Herstellung einer kraftschlüssigen Verbindung durch einfachste Distanzelemente, wie zum Beispiel Distanzscheiben unterschiedlicher Dicke, ist montageunfreundlich und führt zu erhöhten Kosten. Es besteht daher seit längerem der Bedarf, eine Montageelement zur Verfügung zu stellen, welches zur Verbindung von Bauteilen eingesetzt werden kann, die unerwünschte Beabstandungen aufweisen.

Aus der Europäischen Patentschrift EP 0 176 663 ist eine Vorrichtung zum verspannenden Verbinden von mit Abstand zueinander liegenden Bauteilen bekannt. Diese Vorrichtung besitzt unter anderem eine sich mit der äußeren Breitseite an dem einen Bauteil abstützende Distanzscheibe, welche mit wendelgangförmig liegenden Steigungs-Stützflächen ausgestattet ist, denen formpassende wendelförmige, dem anderen Bauteil zugeordnete Gegensteigungs-Stützflächen gegenüberliegen. Das Axialmaß, welches von dieser Vorrichtung zwischen den zu verbindenden Bauteilen eingenommen wird, ergibt sich aus der jeweiligen Stellung der Steigungs-Stützflächen zu einander, wobei zur Einstellung dieses Axialmaßes die Distanzscheibe von der Verbindungsschraube beim Herstellen der Verbindung mitgeschleppt werden muß. Ein Nachteil dieser Vorrichtung besteht in ihrem komplizierten Aufbau, der eine teure Herstellung bedingt. die Anwendung dieser Vorrichtung während eines Montagevorganges ist insbesondere an schwer zugänglichen Stellen sehr unkomfortabel da die einzelnen Distanzelemente bis zum Einsetzen der Verbindungsschraube in Position gehalten werden müssen. Sobald die bekannte Vorrichtung durch ein vorderes Bauteil abgedeckt ist, kann die Einstellung des nötigen axialen Abstandes Schwierigkeiten bereiten, da das Mitschleppen der Distanzscheibe durch die Verbindungsschraube nicht in jedem Fall sichergestellt ist. Ein weiterer Nachteil dieser Vorrichtung nach dem Stand der Technik besteht darin, daß axiale Toleranzabstände nur in einem relativ kleinen Bereich ausgeglichen werden können. Aufgrund der Gestaltung der Distanzscheiben können die Steigungsflächen nur mit einer relativ geringen Steigung ausgelegt werden, um eine Verdrehung mit mäßigen Kraftaufwand zu ermöglichen.

Eine Aufgabe der vorliegenden Erfindung besteht somit darin, ein Montageelement zur Verfügung zu stellen, weiches die beabstandete, kraftschlüssige Verbindung zweier Bauteile ermöglicht, ohne Verspannungen in den Bauteilen hervorzurufen, wobei die Nachteile bekannter Montageelemente vermieden werden sollen. Unter Verwendung dieses Montageelements soll eine Verbindungsstelle geschaffen werden, die einfach und kostengünstig herzustellen und bei der Montage handhabungssicherer ist. Die zu schaffende Verbindungsstelle soll einen axialen Toleranzausgleich zwischen Bauteilen in relativ großen Bereichen ermöglichen.

Diese Aufgabe wird einerseits dadurch gelöst, daß das Montageelement in seiner Außenabmessung derart auf die zu verbindenden Bauteile abgestimmt ist, daß es die Montageöffnungen aller Bauteile, ausgenommen der des Vorderbauteils durchdringt; daß das Montageelement aus einer Hinterhülse und einer Vorderhülse besteht, die entlang einer Gleitfläche mit axialer Steigung lose ineinandergreifen; daß die Gleitfläche eine axiale Verschiebung der beiden Hülsen zueinander ermöglicht; daß das Eindringen des Verbindungselements in das Montageelement ein tieferes Ineinandergreifen der Hülsen auslöst; und daß aus diesem tiefen Ineinandergreifen der Hülsen eine seitliche bzw. radiale Verschiebung der Hülsen zueinander oder eine Erweiterung der Vorderhülse zumindest im Bereich der Montageöffnung des Hinterbauteils resultiert.

Ein Vorteil dieses Montageelements besteht in der einfachen Handhabung, da das Montageelement vor dem Aufbringen des Vorderbauteils in die Montageöffnung des Hinterbauteils, gegebenenfalls die Montageöffnungen zwischenliegender Bauteile durchdringend, eingesetzt wird und dort bei entsprechender Dimensionierung einen ausreichend festen Halt hat. Im weiteren kann das Vorderbauteil aufgebracht werden, an dessen Innenseite das Ende des Montageelements anstößt, wodurch dieses bereits vor dem Einbringen des Verbindungselements den nötigen bzw. gewünschten axialen Abstand zwischen den Bauteilen ausfüllt. Eine Einstellung der axialen Ausdehnung des Verbindungselements ist somit nicht mehr erforderlich. Mit dem erfindungsgemäßen Montageelement können auch relativ große Toleranzbereiche abgedeckt werden, da sich der überbrückbare axiale Abstand aus der axialen Gesamtlänge des Montageelements ergibt.

Eine zu bevorzugende Ausführungsform des erfindungsgemäßen Montageelements zeichnet sich dadurch aus, daß die Gleitfläche mindestens eine Keilfläche mit in axialer Richtung veränderlicher Höhe umfaßt. Dabei ist es besonders zweckmäßig, wenn die Hülsen zylinderförmig ausgebildet sind und die Gleitfläche im wesentlichen entlang des gesamten Umfangs der Hülsen ausgebildet ist. Eine derartige Gleitfläche läßt sich besonders einfach herstellen und die zylinderförmigen Hülsen können in kreisrunde Montageöffnungen ohne weiteren Positionierungsaufwand eingesetzt werden.

Es sind aber auch andere Ausführungsformen möglich, bei denen die Hülsen beispielsweise einen quadratischen Querschnitt haben und in entsprechend geformte Montageöffnungen eingesetzt werden. Die Gleitfläche muß dann in angepaßter Weise an einer oder mehreren Seitenflächen angeordnet werden.

Es ist besonders zweckmäßig, wenn die Gleitfläche, die sowohl durch Abschnitte an der Hinterhülse als auch durch Abschnitte an der Vorderhülse gebildet wird, als komplementäre, umlaufende Keilflächen mit in axialer Richtung veränderlicher Höhe ausgebildet ist. Auf diese Weise ist eine besonders einfach axiale Ineinanderverschiebung der Hülsen möglich und durch die Ausbildung doppelter Keilflächen kann die aufzuwendende Verschiebekraft klein gehalten werden.

Eine abgewandelte Ausführungsform des Montageelements zeichnet sich dadurch aus, daß gegenüberliegende Oberflächenlinien auf der jeweiligen Keilfläche der Hinterhülse und der Vorderhülse parallel zueinander verlaufen. Beim Eindringen des Verbindungselements in das Montageelement kommt es in diesem Fall zu einer seitlichen bzw. radialen Verschiebung der beiden Hülsen zueinander, wodurch das Montageelement mindestens in der Montageöffnung des Hinterbauteils verkeilt wird.

Bei einer anderen Ausführungsform verlaufen die sich gegenüberliegenden Oberflächenlinien auf der jeweiligen Keilfläche konisch zueinander, so daß ein Eindringen der Hinterhülse in die Vorderhülse eine Spreizung der Vorderhülse hervorruft, was die Befestigung des Montageelements in der Montageöffnung des Hinterbauteils bewirkt.

Vorzugsweise wird als Verbindungselement eine Gewindeschraube verwendet, die in ein Innengewinde im Montageelement eingreift. Bei abgewandelten Ausführungsformen können Montageelement und Verbindungselement aber auch anders ausgestaltete Verzahnungsbereiche, wie zum Beispiel Rastkanten, besitzen.

Eine besonders vorteilhafte Ausführungsform besitzt eine Vorderhülse, die in axialer Richtung wenigsten abschnittsweise geschlitzt ist. Dies ermöglicht eine leichtere Umfangsaufweitung der Vorderhülse beim Eindringen der Hinterhülse während des Montagevorgangs.

Die oben genannten Aufgaben werden andererseits durch eine Verbindungsstelle gelöst, die sich dadurch auszeichnet, daß das Verbindungselement in ein Montageelement der erfindungsgemäßen Art eingreift, welches alle zu verbindenden Bauteile, außer dem Vorderbauteil, in den Montageöffnungen durchdringt und beim Verspannen mit dem Verbindungselement mindestens in der Montageöffnung des Hinterbauteils eine Querschnittserweiterung erfährt.

Es ist besonders vorteilhaft, wenn die Verbindungsstelle so ausgestaltet ist, daß die Montageöffnung des Hinterbauteils mit einer das Montageelement aufnehmenden Buchse ausgerüstet ist. Dies ist insbesondere bei dünnwandigen Bauteilen nützlich, da auf diese Weise ein sicherer Sitz des Montageelements in dem Hinterbauteil gewährleistet ist und eine ungewünschte Deformation oder Zerstörung des Bauteils im Bereich der Montageöffnung aufgrund der montagebedingenten Querschnitterweiterung des Montageelements sicher verhindert wird.

Bei einer abgewandelten Ausführungsform der Verbindungsstelle ist an der dem Vorderbauteil abgewandten Seite des Hinterbauteils ein zusätzliches Befestigungselement, beispielsweise eine Gewindemutter, angeordnet, in welchem das Verbindungselement verankert wird. Die Verwendung des zusätzlichen Befestigungselements kann zu einer erhöhten Festigkeit der Verbindung beitragen.

Weitere Vorteile, Einzelheiten und Weiterbildungen der vorliegenden Erfindung ergeben sich aus der nachfolgenden Beschreibung bevorzugter Ausführungsformen, unter Bezugnahme auf die Zeichnung. Es zeigen:
- Fig. 1: eine erfindungsgemäße Verbindungsstelle mit einem erfindungsgemäßen Montageelement gemäß einer ersten Ausführungsform in einer seitlichen Schnittansicht;
- Fig. 2: die Verbindungsstelle mit einer zweiten Ausführungsform des Montageelements in einer seitlichen Schnittansicht, wobei nur eine Hinterhülse eine Keilfläche aufweist;
- Fig. 3: die Verbindungsstelle mit einer dritten Ausführungsform des Montageelements in einer seitlichen Schnittansicht, wobei die Hinterhülse und eine Vorderhülse jeweils eine Keilfläche aufweisen.

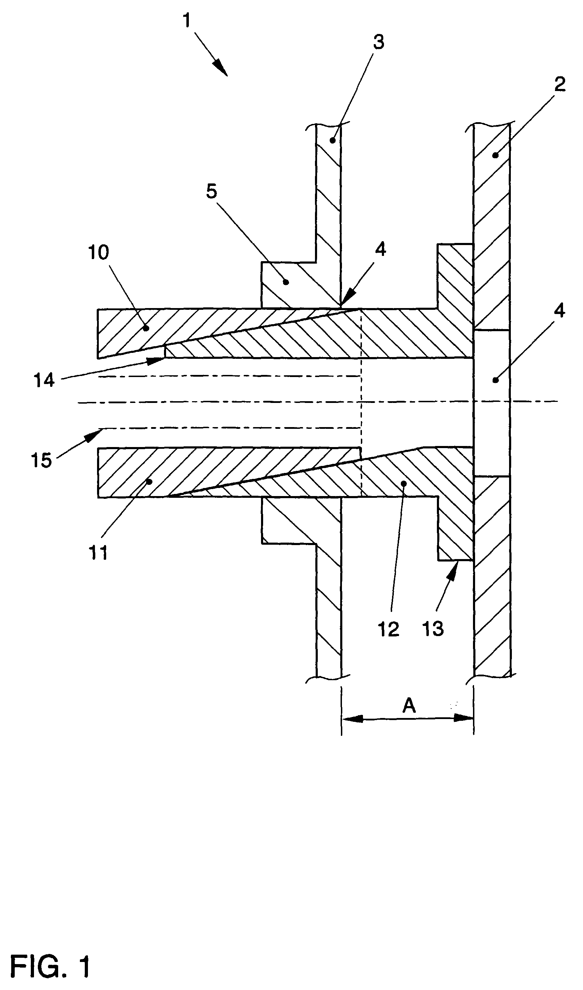

In Fig. 1 ist eine Verbindungsstelle 1 in einer seitlichen Schnittansicht gezeigt. Die Verbindungsstelle besitzt zumindest ein Vorderbauteil 2 und eine Hinterbauteil 3, die jeweils eine Montageöffnung 4 aufweisen. In einem möglichen Einsatzfall sollen die Bauteile 2, 3 durch eine Schraubverbindung miteinander verbunden werden. Aufgrund von Toleranzen in der Fertigung oder während der Montage weisen die Bauteile 2, 3 einen Abstand A voneinander auf, der bei der Montage im wesentlichen beibehalten werden soll, um unerwünschte Materialspannungen in den Bauteilen 2, 3 zu vermeiden.

Im dargestellten Beispiel ist die Wandungstärke des Bauteils 3 im Bereich der Montageöffnung 4 durch Ausbildung einer Buchse 5 vergrößert. Dies kann durch Tiefziehen des Materials erfolgen. Es ist in anderen Ausführungsformen auch möglich eine separate Buchse in die Montageöffnung 4 einzusetzen, die dort durch Schweißen, Kleben oder auf andere Weise befestigt wird.

Zwischen dem Vorderbauteil 2 und dem Hinterbauteil 3 ist ein Montageelement 10 angeordnet, welches sich durch die Montageöffnung 4 des Hinterbauteils 3 erstreckt. Sofern zwischen dem Vorderbauteil 2 und dem Hinterbauteil 3 weitere Bauteile angeordnet sind, durchdringt das Montageelement 10 diese Bauteile ebenfalls in Montageöffnungen.

Das Montageelement 10 besteht aus einer Hinterhülse 11 und einer Vorderhülse 12. Die beiden Hülsen 11, 12 können beispielsweise aus Kunststoff oder Metall hergestellt sein, abhängig von den aufzunehmenden Kräften. Das Montageelement 10 ist hinsichtlich seiner Außenabmessungen so dimensioniert, daß es vergleichbar zu einem Dübel in die Montageöffnung 4 leichtgängig eingesetzt werden kann. Das Montageelement 10 ist weiterhin so gestaltet, daß es an der Innenseite des Vorderbauteils 2 anliegt und dessen Montageöffnung nicht durchdringt, bei der in Fig. 1 gezeigten Ausführungsform ist an der Vorderhülse 12 eine kragenförmige Querschnitterweiterung 13 angeformt, die einer stabilen Auflage am Vorderbauteil 2 dient.

Die Hinterhülse 11 und die Vorderhülse 12 greifen ineinander ein und grenzen entlang einer Gleitfläche 14 aneinander an. Die in Fig. 1 dargestellte Ausführungsform weist die Besonderheit auf, daß die an gegenüberliegenden Seiten der beiden Hülsen gebildeten Gleitflächen als Keile ausgeformt sind, wobei die Keilflächen einer Hülse parallel zueinander verlaufen. Eine derartige Ausgestaltung kommt bei Montageelementen mit rechteckigem Außenquerschnitt in Frage. Dies würde gleichzeitig den Vorteil mit sich bringen, daß das in eine Montageöffnung mir rechteckigem Querschnitt eingesetzte Montageelement bei der weiteren Montage in dieser Montageöffnung nicht verdreht werden kann.

Das Steigungsverhältnis der ausgebildeten Keile kann vorzugsweise 1:100 bis 1:50 betragen.

Das Montageelement 10 besitzt in seinem Inneren weiterhin einen Verzahnungsbereich 15, insbesondere ein Innengewinde. Bei der Montage der beiden Bauteile 2, 3 wird nach dem Einsetzten des Montageelementes 10 in das Hinterbauteil 3 ein Verbindungselement 16, insbesondere eine Gewindeschraube, durch die Montageöffnung 4 des Vorderbauteils 2 in das Montageelement 10 eingeführt, wobei die jeweiligen Verzahnungsbereiche (Gewinde) des Verbindungselements und des Montageelements ineinandergreifen. Bei der Verwendung einer Gewindeschraube kann diese nunmehr festgezogen werden, bis ein ausreichend fester Sitz des Vorderbauteils 2 gewährleistet ist. Beim Anspannen der so hergestellten Verbindungsstelle 1 werden die Hinterhülse 11 und die Vorderhülse 12 leicht aufeinanderzubewegt, wobei sie entlang der Gleitfläche 14 eine axiale Relativbewegung ausführen. Bei der in Fig. 1 dargestellten Ausführungsform führt diese axiale Bewegung durch die Gestaltung der Keilflächen zu einer seitlichen bzw. radialen Verschiebung zwischen den Hülsen 11, 12 und damit zu einer Querschnitterweiterung des Montageelements 10, so daß dieses in der Buchse 5 seitlich verspannt wird. Durch diese Querverspannung wird das Montageelement 10 an einem weiteren Hineingleiten in die Montageöffnung 4 des Hinterbauteils 3 gehindert, so daß der Abstand A zwischen den Bauteilen 2, 3 nahezu unverändert erhalten bleibt.

Zur weiteren Vereinfachung der Montage können die Hinterhülse 11 und die Vorderhülse 12 mit einer Abreißverbindung versehen sein, die die beiden Hülsen beim Einsetzen in die Bauteile zusammenhält und erst bei einer Verschiebung der Hülsen zueinander zerstört wird. Als Abreißverbindung kann zum Beispiel eine Lackschicht zwischen den beiden Hülsen oder eine aus dünnen Kunstoffstegen bestehende Verbindung dienen.

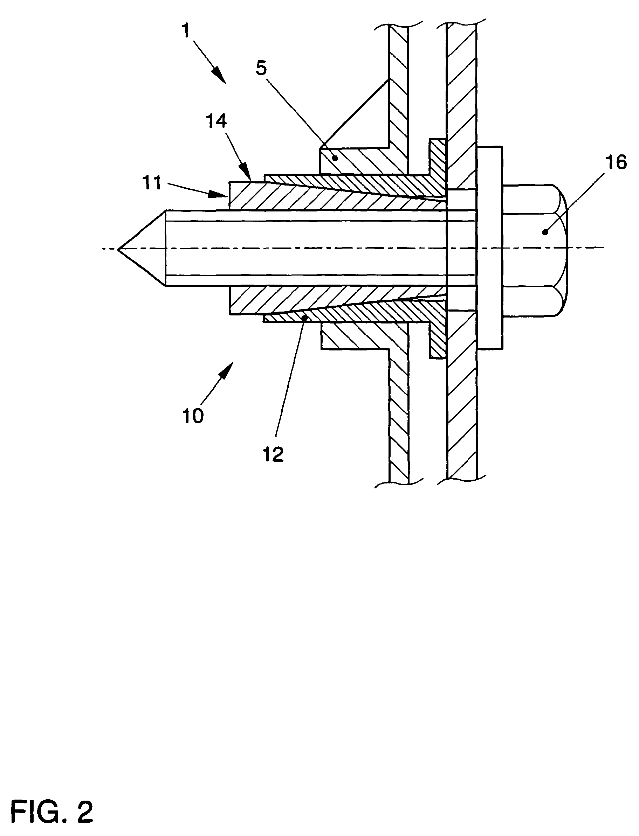

Fig. 2 zeigt in einer seitlichen Schnittansicht eine zweite Ausführungsform des Montageelements 10 in der erfindungsgemäßen Verbindungsstelle 1. Der wesentliche Unterschied des hier dargestellten Montageelements zur ersten Ausführungsform besteht in der Gestaltung der Gleitfläche 14. Bei der in Fig. 2 gezeigten Ausführungsform weist nur die Hinterhülse 11 eine als Gleitfläche wirkende Keilfläche auf, während die Vorderhülse 12 eine beispielsweise zylindrische Innenwand besitzt. Die Hinterhülse 11 ist in diesem Fall mit einem Innengewinde ausgerüstet, in welches die Gewindeschraube 16, die als Verbindungselement wirkt, eingeschraubt wird. Dadurch wird die Hinterhülse 11 in die Vorderhülse 12 in axialer Richtung hineingezogen, so daß die Keilfläche 14 eine Aufspreizung der Vorderhülse 12 bewirkt. Um eine derartige Aufspreizung zu vereinfachen ist es vorteilhaft, zumindest entlang eines Abschnitts der Vorderhülse einen axialen Schlitz anzubringen. Die Außenwandung der Vorderhülse 12 kann außerdem aufgerauht sein, um einen höheren Reibungswiderstand in der Buchse 5 zu erlangen.

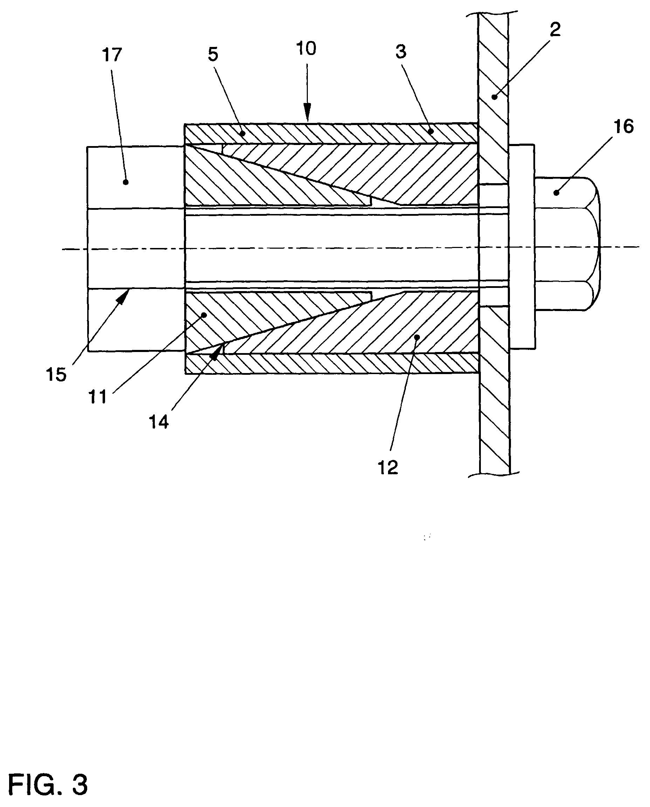

Fig. 3 zeigt eine seitliche Schnittansicht einer dritten Ausführungsform des Montageelements 10, welches wiederum in der erfindungsgemäßen Verbindungsstelle eingesetzt ist. Bei dieser dritten Ausführungsform ist die Gleitfläche 14 wiederum abgewandelt ausgestaltet. Die Hinterhülse 11 und die Vorderhülse 12 besitzen jeweils konisch verlaufende Keilflächen, wobei diese Keilfläche bei der Hinterhülse 11 an der äußeren Mantelfläche angeordnet ist, während die Vorderhülse 12 eine konische Innenmantelfläche besitzt. Die Verspannung des Montageelements 10 erfolgt wiederum durch das Hineinziehen der Hinterhülse 11 in die Vorderhülse 12, wobei letztere aufgeweitet wird. Bei dieser Ausführungsform ist jedoch kein Innengewinde unmittelbar in den Hülsen vorgesehen. Vielmehr ist an dem extrorsen Ende der Hinterhülse 11 eine Gewindemutter 17 angeordnet, die mit der Hinterhülse 11 fest verbunden ist und mit dem Verbindungselement 16 eine Schraubverbindung bildet.

Es sind anderer Ausführungsformen denkbar, bei denen die Gleitfläche beispielsweise nur an einzelnen Abschnitten der Hülsen vorgesehen ist. Ebenso kann als Verbindungselement auch ein mit Rastzähnen versehener Nagel oder ein sonstiges, die nötige Funktion erfüllendes Element vorgesehen sein.

### BEZUGSZEICHENLISTE

- 1: Verbindungsstelle
- 2: Vorderbauteil
- 3: Hinterbauteil
- 4: Montageöffnung
- 5: Buchse
- 10: Montageelement
- 11: Hinterhülse
- 12: Vorderhülse
- 13: Kragenförmige Querschnittserweiterung
- 14: Gleitfläche (Keilfläche)
- 15: Verzahnungsbereich (Gewinde)
- 16: Verbindungselement (Gewindeschraube)
- 17: Gewindemutter
- A: Abstand zwischen 2 und 3

## Patentansprüche

1. Montageelement (10) zur Positionierung und Verbindung von mindestens einem Hinterbauteil (3) und einem von diesem beabstandeten Vorderbauteil (2), wobei das Montageelement mit einem Verbindungselement (16) zusammenwirkt, das diese Bauteile in Montageöffnungen (4) axial durchdringt und in das Montageelement eindringt, **dadurch gekennzeichnet**,
* daß das Montageelement (10) in seiner Außenabmessung derart auf die zu verbindenden Bauteile (2, 3) abgestimmt ist, daß es die Montageöffnungen (4) aller Bauteile, ausgenommen der des Vorderbauteils (2), durchdringt;
* daß das Montageelement (10) aus einer Hinterhülse (11) und einer Vorderhülse (12) besteht, die entlang einer Gleitfläche (14) mit axialer Steigung lose ineinandergreifen;
* daß die Gleitfläche (14) eine axiale Verschiebung der beiden Hülsen (11, 12) zueinander ermöglicht;
* daß das Eindringen des Verbindungselements (16) in das Montageelement (10) ein tieferes Ineinandergreifen der Hülsen (11, 12) auslöst; und
* daß aus diesem tieferen Ineinandergreifen der Hülsen (11, 12) eine seitliche Verschiebung der Hülsen zueinander oder eine Erweiterung der Vorderhülse (12) zumindest im Bereich der Montageöffnung (4) des Hinterbauteils (3) resultiert.

2. Montageelement (10) nach Anspruch 1, **dadurch gekennzeichnet**, daß die Gleitfläche mindestens eine Keilfläche (14) mit in axialer Richtung veränderlicher Höhe umfaßt.

3. Montageelement nach Anspruch 2, **dadurch gekennzeichnet**, daß die sich gegenüberliegenden Oberflächenlinien auf den Keilflächen (14) jeweils einer Hülse (11, 12) parallel verlaufen.

4. Montageelement (10) nach Anspruch 1 oder 2, **dadurch gekennzeichnet**, daß die Hülsen (11, 12) zylinderförmig ausgebildet sind, und daß die Gleitfläche (14) im wesentlichen entlang des gesamten Umfangs der Hülsen ausgebildet ist.

5. Montageelement (10) nach dem auf Anspruch 2 rückbezogenen Anspruch 4, **dadurch gekennzeichnet**, daß die sich gegenüberliegende Oberflächenlinien auf den Keilflächen (14) jeweils einer Hülse (11,12) konisch verlaufen.

6. Montageelement (10) nach einem der Ansprüche 1 bis 5, **dadurch gekennzeichnet**, daß die Hinterhülse (11) und ggf. Abschnitte der Vorderhülse (12) einen innenliegenden Verzahnungsbereich (15) besitzen, der komplementär zu einem am Verbindungselement (16) außenliegenden Verzahnungsbereich ist.

7. Montageelement (10) nach Anspruch 6, **dadurch gekennzeichnet**, daß der Verzahnungsbereich ein Gewinde (15) ist.

8. Montageelement (10) nach einem der Ansprüche 1 bis 7, **dadurch gekennzeichnet**, daß am Ende der Vorderhülse (12), welches dem Vorderbauteil (2) zugewandt ist, eine kragenförmige Querschnittserweiterung (13) angeordnet ist.

9. Montageelement (10) nach einem der Ansprüche 1 bis 8, **dadurch gekennzeichnet**, daß Hinterhülse (11) und Vorderhülse (12) vor der Montage temporär miteinander verbunden sind.

10. Montageelement nach einem der Ansprüche 4 bis 9, soweit diese nicht direkt oder indirekt auf Anspruch 3 rückbezogen sind, **dadurch gekennzeichnet**, daß die Vorderhülse in axialer Richtung wenigstens abschnittsweise geschlitzt ist, um eine leichtere Umfangsaufweitung zu ermöglichen.

11. Verbindungsstelle (1) zur kraftschlüssigen Verbindung und Positionierung von mindestens einem Hinterbauteil (3) und einem von diesem undefiniert beabstandeten Vorderbauteil (2) mit einem Verbindungselement (16), welches sich axial durch Montageöffnungen (4) in den Bauteilen (2, 3) erstreckt und diese gegeneinander verspannt, **dadurch gekennzeichnet**, daß das Verbindungselement in ein Montageelement (10) nach einem der Ansprüche 1 bis 10 eingreift, welches alle zu verbindenden Bauteile (3), außer dem Vorderbauteil (2), in den Montageöffnungen (4) durchdringt und beim Verspannen mit dem Verbindungselement (16) mindestens in der Montageöffnung (4) des Hinterbauteils (3) eine Querschnittserweiterung erfährt.

12. Verbindungsstelle (1) nach Anspruch 11, **dadurch gekennzeichnet**, daß die Montageöffnung (10) des Hinterbauteils (3) mit einer das Montageelement aufnehmenden Buchse (5) ausgerüstet ist.

13. Verbindungsstelle (1) nach Anspruch 11 oder 12, **dadurch gekennzeichnet**, daß an der dem Vorderbauteil (2) abgewandten Seite des Hinterbauteils (3) ein zusätzliches Befestigungselement (17) angeordnet ist, in welchem das Verbindungselement (16) verankert wird.

14. Verbindungsstelle (1) nach einem der Ansprüche 11 bis 13, **dadurch gekennzeichnet**, daß als Verbindungselement (16) eine Gewindeschraube dient.
